# EUROPEAN PATENT SPECIFICATION

(11) **EP 1 622 765 B1**
(45) Date of publication and mention of the grant of the patent: **25.10.2006**
(21) Application number: 04730973.7
(22) Date of filing: 04.05.2004
(51) Int. Cl.: B32B 27/32

(54) **SEALABLE, MULTILAYER, COEXTRUDED PACKAGING FILM, ITS USE AND PROCESS FOR ITS PRODUCTIOIN**
SIEGELBARER MEHRSCHICHTIGER KOEXTRUDIERTER VERPACKUNGSFILM, SEINE VERWENDUNG SOWIE VERFAHREN ZU DESSEN HERSTELLUNG
FILM D'EMBALLAGE COEXTRUDE, MULTICOUCHE, SCELLABLE, UTILISATION ET PROCEDE DE FABRICATION

(30) Priority: 07.05.2003 EP 03010233
(43) Date of publication of application: 08.02.2006
(73) Proprietor: Topas Advanced Polymers GmbH, 65926 Frankfurt am Main (DE)
(72) Inventor: GOERLITZ, Wolfram, 65193 Wiesbaden (DE); GINOSSATIS, Stammatis, GR-194 00 Koropi-Attiki (GR)
(74) Representative: Ackermann, Joachim
(86) International application number: PCT/EP2004/004694
(87) International publication number: WO 2004/098882

(56) References cited:
- WO-A-03/002343
- US-B1- 6 329 047
- DATABASE WPI Section Ch, Week 200201 Derwent Publications Ltd., London, GB; Class A17, AN 2002-002280 XP002292641 & JP 2001 219503 A (GRAND POLYMER KK) 14 August 2001 (2001-08-14)
- DATABASE WPI Section Ch, Week 199922 Derwent Publications Ltd., London, GB; Class A17, AN 1999-259594 XP002292643 & JP 11 077924 A (TOSERO KK) 23 March 1999 (1999-03-23)

## Description

The invention relates to a sealable, multilayer, coextruded packaging film having low elongation under mechanical load combined with high transparency, suitable for application in "flow-pack" packages produced on form-fill-seal machines, or as a cover film on thermoformed blister packages or on cups (lidding).

The film of this invention comprises at least three layers, between each of which additional primer layers can be arranged if needed, in particular a core layer A comprising a polyolefin, having high modulus or low elongation under load, and outer layers B and C arranged on the two sides of the core layer A, these being identical or different and composed of sealable polyolefins (polyethylene, polypropylene) or of polymers having functional properties. The film of the invention has exceptionally good mechanical properties, i.e. low elongation under mechanical load. The invention also relates to a cost-effective process for producing said film, and to its use as a carrier for high-quality print, and to the production of flow-pack packages on form-fill-seal machines.

Films used for foodstuffs packaging must have special properties in relation to their processability on packaging machines, their printability, and their barrier properties with respect to atmospheric gases such as oxygen, and with respect to water vapor. For reasons of good multicolor printability and processability on packaging machines, the need is for films with high modulus, low coefficient friction, and good sealability.

This combination of features is usually not achievable using a single homopolymer or polymer blends, since no single polymer material possessing all these properties is available. The prior art proposes various multilayer film structures to solve said problem, in particular stretch-oriented films or laminates of stretch-oriented films with unoriented sealant films.

Good-quality multicolor printability requires low elongation in the printing press and little dimensional change in the film. In addition, residual solvent content in the printing ink needs to be low for food packaging applications. It is therefore desirable to use elevated temperatures for efficient drying of the ink. The specific manufacturing process for biaxially oriented films typically gives them the required high modulus, i.e. low elongation under load, and good dimensional stability at elevated temperatures, and these films are widely used as carriers for high-quality multicolor print. However, these films cannot in themselves provide the required sealing properties needed for conversion into packaging on industrial form-fill-seal machines. Laminates of this printed film with a second, non-oriented film are therefore typically used, where the second film contributes additional functional properties as needed, i.e. superior sealing properties or an additional barrier to moisture and gases.

The prior art films have a number of disadvantages. Production of laminated films as described above involves an undesirable multistep film production process with orientation and subsequent lamination to a second film. These laminated asymmetric film structures can curl, causing additional problems when packages are made from precut panels.

It is therefore desirable to provide a film which is suitable for high-quality multicolor printing and processing on high-speed packaging machines, and which can advantageously be manufactured in a one-step process by multilayer coextrusion without any need for orientation or lamination to a second film. While coextruded multilayer films are prior art and are widely used for less demanding applications, they have disadvantages for the intended application, due to lack of mechanical strength, and mostly have disadvantageous tear properties, due to high elongation of these films combined with low mechanical strength. US-B1-6 329 047 discloses a thermoformable composite film consisting of one cycloolefin copolymer film attached on at least one side to a PVdF film, whereby the total thickness of the film is in the range 160 to 550 µm, and the thickness of the cycloolefin layer is in the range 200 to 300 µm.

It is therefore an object of the present invention to provide a novel multilayer packaging film with high suitability for use on form-fill-seal machines to produce flow-pack packages or lidding with high-quality multicolor printing. This object has been achieved by producing a film in a conventional multilayer coextrusion process, and incorporating an amorphous cycloolefin copolymer (COC) into the multilayer film structure.

The invention therefore provides a multilayer film comprising a core layer A comprising an amount of from 50 to 100 % by weight, based on the total weight of the core layer A, of an amorphous cycloolefin copolymer (COC) which has a glass transition temperature T_{g} of at least 60 °C, and comprising at least two outer layers B and C on the two sides of the core layer A, one of which comprises at least one sealable polymer, and one of which comprises at least one functional polymer, where between the core layer A and the outer layers B and C may be arranged additional intermediate layers bringing about firm bonding between the core layer A and the outer layers B and C, and where the film has a total thickness in the range from 10 to 200 µm, preferably from 20 to 150 µm, wherein the core layer A makes up from 5 to 60 % of the total thickness of the film, preferably from 10 to 50 %, particularly preferred from 15 to 40 %.

The invention also provides a process for the production of this film, and the use of the film for the production of flow-pack packaging on form-fill-seal machines, or as a cover film on thermoformed blister packs or on cups.

The cycloolefin copolymer (COC) used in the invention preferably has a glass transition temperature T_{g} of more than 60 °C , preferably from about 80 to 150 °C.

The cycloolefin copolymers (COC) used for the core layer A of the multilayer film of the invention are generally composed of ethylene units and/or of units comprising an alpha-olefin with a cyclic, bicyclic or multicyclic olefin. Preferably, the COC is a copolymer from ethylene and norbornene. Such COC are prepared in the presence of transition metal polymerization catalysts described in EP-A-0 407 870 or EP-A-0 485 893. The processes described there are suitable to provide COC with low polydispersity (M_{w}/Mₙ = 2). This avoids disadvantages such as migration, extractability or tack caused by the low-molecular-weight constituents. The molecular weight of the COC is adjusted during the preparation process by using hydrogen, careful catalyst selection, and careful selection of the conditions of the polymerization reaction.

Outer layers having functional properties in the sense of the invention comprise polymers which further improve the good barrier properties of COC in terms of the moisture vapor transmission rate or polymers which comprise additives improving the frictional properties of the film. Examples of these additives are anti-blocking agents, such as inorganic particles made from alkaline earth metal carbonates or from alkali metal carbonates, or from oxides, or from silicates.

Other mineral additives are materials such as aluminum oxide, aluminum sulfate, barium sulfate, calcium carbonate, magnesium carbonate, silicates, such as aluminum silicate (kaolin), and magnesium silicate (talc), silicon dioxide and titanium dioxide.

Besides the inorganic additives, however, it is possible and advantageous to use organic lubricants, such as polydialkylsiloxanes of various composition.

According to the invention, the polymers used having functional properties may comprise polyamides, produced from the reaction of diamines with dicarboxylic acids or by ring-opening of lactams. Examples of suitable polyamides are polyhexamethylenesebacamide and poly-epsilon-caprolactam. Other polymers with functional properties are polyvinyl alcohols with varying degrees of hydrolysis, and polyesters, such as polybutylene terephthalate.

According to the invention, suitable sealable layers are layers made from polyolefins, in particular from PE, or from copolymers of ethylene and propylene having a propylene content of up to 10% by weight. Other suitable sealable polymers are ionomeres such as ^{®}Surlyn 1705 from DuPont.

Besides the core layer A and the outer layers B and C, the films of the invention may comprise other layers, if this is a requirement for the technical application in the packaging of certain packed goods. The additional layers here should, as far as necessary, also have been bonded securely to the other layers of the film, using adhesion promoter layers.

The combination of various polymers in a composite according to the instant invention, whereby the composite being prepared by the simple technique of coextrusion, combines the property profiles of the different polymeric materials with one another in a favorable manner. The layers of the film fit together to ensure that the film composite has the mechanical properties needed, specifically high tensile strength with low elongation, these being required for high-quality multicolor printing and further processing to give packaging, such as flow packs or lid films, while also providing the water-vapor barrier and gas barrier needed to preserve the contents, together with sealing properties. However, in addition to an improvement in properties a reduction in the cumulative thickness of the entire film structure is achieved, giving either higher mechanical strength at a given film thickness or a substantial rise in barrier action with respect to water vapor, or, for given property profiles, a marked reduction in layer thickness and, thus, a cost saving.

The film of the invention has a combination of the following properties:
High tensile elongation modulus measured according to ASTM D822 (i.e. high tensile stresses with low elongation);
good barrier properties with respect to water vapor according to DIN 53122 (i.e. low moisture vapor transmission rate);
good transparency and printability.

In terms of the instant invention, a high tensile elongation modulus is understood to be in the range of at least 500 N/mm², preferred at least 700 N/mm², most preferred at least 800 N/mm².

In terms of the instant invention, good barrier properties are understood to be in the range of below 0,5 g·mm/(m²·day), preferred below 0,35 g·mm/(m²·day).

One or more outer layers of the multilayer film of the invention may moreover also comprise neutralizing agents, stabilizers, lubricants, hydrocarbon resins, and/or antistats, or antifogging agents.

Stabilizers which may be used are the customary stabilizing compounds for ethylene polymers, for propylene polymers, and for other alpha-olefin polymers. The amount added of these is from 0.05 to 2.0% by weight. Particularly suitable materials are phenolic stabilizers, alkali metal stearates, alkaline earth metal stearates, and/or alkali metal carbonates, alkaline earth metal carbonates. Preference is given to an amount of from 0.1 to 0.6% by weight, preferably from 0.15 to 0.3% by weight, of phenolic stabilizers whose molar mass is more than 500 g/mol. Particularly advantageous materials are pentaerythritol tetrakis-3-(3,5-di-tert-butyl-4-hydroxyphenyl)propionate or 1,3,5-trimethyl-2,4,6-tris(3,5-di-tert-butyl-4-hydroxybenzyl)benzene.

Lubricants are higher aliphatic amides, higher aliphatic esters, and waxes and metal soaps, and also polydimethylsiloxanes. The effective amount of lubricant is in the range from 0.1 to 3.0% by weight. A particularly suitable method is addition of higher aliphatic amides in the range from 0.15 to 0.25% by weight in base layers and/or outer layers.

Preferred antistats are alkali metal alkanesulfonates, polyether-modified, i.e. ethoxylated and/or propoxylated, polydiorganosiloxanes (polydialkylsiloxanes, polyalkylphenylsiloxanes, and the like), and/or the substantially straight-chain and saturated aliphatic, tertiary amines having an aliphatic radical having from 10 to 20 carbon atoms, these having substitutions with α-hydroxy-(C₁-C₄)-alkyl groups, particularly suitable materials being N,N-bis(2-hydroxyethyl)alkylamines having from 10 to 20 carbon atoms, preferably from 12 to 18 carbon atoms, in the alkyl radical. The effective amount of antistat is in the range from 0.05 to 3.0% by weight. Glycerol monostearate is another preferred antistat.

Where appropriate, the covering also comprises organic compounds having polar and non-polar groups. Preferred organic compounds are alkanols and fatty acids having from 8 to 30 carbon atoms in the alkyl group, in particular fatty acids and primary n-alkanols having from 12 to 24 carbon atoms, and also polydiorganosiloxanes and/or polyorganohydrosiloxanes, such as polydimethylsiloxane and polymethylhydrosiloxane.

Addition of sufficient amounts of these substances can also permit production of a white or opaque embodiment of the film.

Semicrystalline polyolefins which may generally be used are polymers of ethylene or α-olefins, such as propene, n-butene, isobutene, and higher α-olefins, or copolymers of these. Use may advantageously be made of polypropylene, polyethylenes such as HDPE, LDPE and LLDPE, or else of mixtures prepared from these. Preference is given to mixtures of LDPE and LLDPE in any mixing ratio from 5 to 100 %. Where appropriate, the semicrystalline polyolefin comprises other additives, each in an effective amount.

The invention also provides a process for producing the film of the invention, in which all the polymers/polymer mixtures forming the film are melted in separate extruders, and then the melt(s) is/are coextruded through a flat-film or annular die, formed to a film, cooled and solidified in a cast or blown film process and, followed, where appropriate, only by surface treatment of the film, thereby omitting the stretching steps usually needed for high strength films.

The additives used where appropriate may be present in the polymer or polymer mixture as it stands, or may be added via masterbatch technology. The film is then wound up in the usual way, using wind-up equipment.

The take-off roll or take-off rolls which also cool(s) and solidify(ies) the extruded film are mostly maintained at a temperature from 20 to 90 °C.

Where appropriate, one or both surfaces of the film may be corona- or flame-treated by one of the known methods, the usual result being an improvement in the surface polarity, and therefore the printability, of the treated surface.

The test methods used in the examples listed below were as follows:

| | |
|---|---|
| Tensile elongation modulus | ASTM |
| | D882 |
| Moisture Barrier properties 38 °C at 90 % | DIN |
| rel. humidity | 53122 |

### Working Examples

Coextrusion was used to produce a number of multilayer films, using a flat-film die (example 1) in a cast film process, or using an annular die in a blown film process (examples 2 to 7). These films had total thickness of from 50 to 120 µm and comprised at least five layers, a base layer A and two outer layers B1/B2 and C1/C2, bonded to the base layer by two tie layers (primer layers). The thickness of each layer is shown in the table below.

The base layer A comprised thermoplastic COC having an amorphous structure based on ethylene and norbornene from Ticona GmbH, Germany, (^{®}Topas 8007 and ^{®}Topas 6015 with T_{g} of 80 °C and 160 °C, respectively). The base layer in some of the samples also comprised a blend of COC with linear low density polyethylene (LLDPE).

The films were printed on a 6-color gravure printing machine.

These multilayer films were used to produce flow-pack packages on horizontal form-fill-seal machines (type: ULMA PV 350, Spain).

Films comprising laminated oriented outer layers B of polyester or polyamide and sealant layers C of polyethylene were used for comparison purposes as comparison examples 1 and 2.

The performance of all of the samples produced along with the working examples in the printing and packaging processes was comparable with or better than that of the films produced along with the comparative examples.

**Table 1**

| Example | Layer structure | Layer Thickness (µm) | Total Thickness (µm) |
|---|---|---|---|
| 1 | Structure 1; layer A = 7 µm COC | 17/5/7/5/16 | 50 |
| 2 | Structure 2; layer A = 10 µm COC/LLDPE blend (80:20) | 20/5/5/10/25 | 65 |
| 3 | Structure 2; layer A = 10 µm COC/LLDPE blend (90:10) | 20/5/5/10/25 | 65 |
| 4 | Structure 2; layer A = 10 µm COC | 20/5/5/10/25 | 65 |
| 5 | Structure 3; layer A = 15 µm COC | 15/5/5/15/5/20 | 65 |
| 6 | Structure 3; layer A = 20 µm COC | 25/5/5/20/5/22 | 85 |
| 7 | Structure 3; layer A = 25 µm COC | 40/5/5/25/5/40 | 120 |

**Table 2**

| **Structures** | | |
|---|---|---|
| **Structure 1** | | **PA/Tie/COC/Tie/Ionomer** |
| | Where | |
| | | COC has T_{g} of 160 °C (^{®}Topas 6015, Ticona) |
| | | PA is a PA6 (^{®}Ultramid 35, BASF) |
| | | Tie is an MAA-grafted polyolefin (^{®}Bynel 41 E623, DuPont) |
| | | lonomer (^{®}Surlyn 1705, DuPont) |

| **Structure 2** | | **PA/EVOH/Tie/COC/LLDPE** |
|---|---|---|
| | Where | |
| | | COC has T_{g} of 80 °C (Topas 8007, Ticona) |
| | | PA is a PA6 (Ultramid 35, BASF) |
| | | EVOH is a 38 % copolymer (H171 from EVALco) |
| | | Tie is an MAA-grafted polyolefin (Bynel 41 E623, DuPont) |
| | | LLDPE has a density of 0,910 g/cm² (ExxonMobil 1012CA) |

| **Structure 3** | | **PA/EVOH/Tie/COC/Ionomer** |
|---|---|---|
| | Where | |
| | | COC has T_{g} of 80 °C (Topas 8007, Ticona) |
| | | PA is a PA6 (Ultramid 35, BASF) |
| | | EVOH is a 38% copolymer (H171 from EVALco) |
| | | Tie is an MAA-grafted polyolefin (Bynel 41 E623, DuPont) |
| | | lonomer (Surlyn 1705, DuPont) |

### Comparative Examples

The following comparative films were laminated, comprising an oriented film made from polyamide or polyester and a non-oriented film made from polyethylene:

**Table 3**

| Comparative examples, laminates | | |
|---|---|---|
| 92 µm | oPET/PE | 12 µm oPET / 80 µm PE |
| 85 µm | oPA/PE | 15 µm oPA / 70 µm PE |

| | | |
|---|---|---|
| oPET means oriented polyethyleneterephthalate, oPA means oriented polyamide. | | |

| **Test methods:** | |
|---|---|
| Tensile elongation | ASTM D882 |
| modulus: F1 | force in N at 1 % elongation of 15 mm strip, setup according to ASTM D882, |
| MVTR | DIN 53122, at 38 °C and 90 % rel. humidity. Results given as moisture vapor transmission rate of sample film in units of g/(m²·day) and for comparison purposes also calculated thickness independent permeability coefficients for water vapor in units of g·mm/(m²·day). |

The results from the examples and from the comparative examples are shown in Table 4 below:

**Table 4**

| Property | Modulus | Modulus | F1 | F1 | MVTR | MVTR |
|---|---|---|---|---|---|---|
| Condition Unit | Machine direction N/mm² | Transverse direction N/mm² | Machine direction N | Transverse direction N | Film g/(m²·day) | Permeability coefficient g·mm/(m²·day) |
| Example 1 | 710 | 570 | 5.3 | 4.3 | 9,3 | 0,47 |
| Example 2 | 841 | 856 | 8.6 | 8.8 | 5,7 | 0,37 |
| Example 3 | 877 | 919 | 8.7 | 9.1 | 5,5 | 0,36 |
| Example 4 | 1025 | 1016 | 10.5 | 10.4 | 5,3 | 0,34 |
| Example 5 | 1150 | 1123 | 11.7 | 11.4 | 4,0 | 0,26 |
| Example 6 | 1156 | 1181 | 14.7 | 15.0 | 3,1 | 0,26 |
| Example 7 | 994 | 925 | 17.9 | 16.7 | 2,4 | 0,29 |
| | | | | | | |
| Comp. example 1 | 723 | 740 | 9.8 | 10.0 | 6,2 | 0,56 |
| Comp. example 2 | 420 | 440 | 5.4 | 5.7 | 7,0 | 0,60 |

Mechanical properties at elevated temperatures were evaluated by measuring storage modulus at temperature of 70 °C by DMA (dynamic mechanical analysis). Equipment: GABO Qualimeter EPLEXOR 150 N. Conditions: static strain = 0,7 %, dynamic strain = 0,3 %. Frequency: 10 Hz.

Results are shown in Table 5 below.
At a temperature of 70 °C all films prepared according to working examples of the instant invention had higher storage modulus than the films prepared along with comparative examples.

**Table 5**

| Sample | Temperature | Storage Modulus N/mm² |
|---|---|---|
| Example 1 | 70 °C | 540 |
| Example 4 | 70 °C | 600 |
| Comp. Example 1 | 70 °C | 340 |

Film layer sequences of films according to the invention are not limited to those given in the above examples. Additional examples of structures with 5 to 9 layers are exemplified in the following table below:

| No. | Layer Sequence |
|---|---|
| Example 8 | PA / EVOH / tie / A(COC) / (tie) / sealant (PE, EVA..) |
| Example 9 | PBT / tie / EVOH / tie / A(COC) / sealant (PE-LLD) |
| Example 10 | PA / EVOH / tie / A(COC) / PE-LLD / tie / sealant (Ionomer) |
| Example 11 | LDPE / tie / EVOH / tie / A(COC) / PE-LLD / A(COC) / tie / sealant (Ionomer) |
| Example 12 | TB / tie / EVOH / tie / A(COC) / PE-LLD / TB |

Wherein:
A(COC) denotes the core layer A containing at least 50 % of amorphous polyolefin.
TB denotes additional layers comprising a blend of COC and Polyethylene (less than 30 % of COC)
Examples 8 to 10 stand for examples for different functional outer layers (sealant and oxygen barrier);
Example 11 illustrates an example for a core layer split into two sublayers;
Example 12 illustrates an example for a low curl film containing additional outer layers comprising of a COC-blend.

## Claims

1. A multilayer packaging film comprising a core layer A comprising an amount of from 50 to 100 % by weight, based on the total weight of the core layer A, of an amorphous cycloolefin copolymer (COC) which has a glass transition temperature T_{g} of at least 60 °C, and comprising at least two outer layers B and C on the two sides of the core layer A, one of which comprises at least one sealable polymer, and one of which comprises at least one functional polymer, where between the core layer A and the outer layers B and C may be arranged additional intermediate layers bringing about firm bonding between the core layer A and the outer layers B and C, and where the film has a total thickness in the range from 10 to 200 µm, preferably from 20 to 150 µm, wherein the core layer A makes up from 5 to 60 % of the total thickness of the film, preferably from 10 to 50 %, particularly preferred from 15 to 40 %.

2. The packaging film as claimed in claim 1, wherein the COC is a copolymer of ethylene and/or of an α-olefin with a cyclic, bicyclic, or multicyclic olefin.

3. The packaging film as claimed in claim 1 or 2, wherein the COC is a copolymer made from ethylene and norbornene.

4. The packaging film as claimed in one or more of claims 1 to 3, wherein the functional polymers comprise polymers further improving the barrier properties of COC in terms of gas transmission rate or polymers which comprise additives improving the frictional properties of the film.

5. The packaging film as claimed in one or more of claims 1 to 4, wherein the functional polymers comprise polyamides, produced from the reaction of diamines with dicarboxylic acids or by ring-opening of lactams, such as polyhexamethylenesebacamide and poly-epsilon-caprolactam, or other polymers with functional properties, such as ethylene vinyl alcohol copolymers or polyvinyl alcohols with varying degrees of hydrolysis and polyesters, such as polyethylene terephtalate or polybutylene terephthalate.

6. The packaging film as claimed in one or more of claims 1 to 5, wherein the additives comprise anti-blocking agents, such as inorganic particles made from alkaline earth metal carbonates or from alkali metal carbonates, or from oxides, or from silicates.

7. The packaging film as claimed in one or more of claims 1 to 6, wherein the functional polymers further comprise organic lubricants, such as polydialkylsiloxanes.

8. The packaging film as claimed in one or more of claims 1 to 7, wherein the sealable polymers comprise polyolefins such as polyethylene or copolymers of ethylene and propylene or copolymers of ethylene and vinylacetate or sealable ionomeres.

9. The packaging film as claimed in one or more of claims 1 to 8, wherein the intermediate layers comprise adhesion promoters, primer compositions or adhesives.

10. The packaging film as claimed in one or more of claims 1 to 9, wherein its tensile elongation modulus is in the range of at least 500 N/mm², preferred of at least 700 N/mm², more preferred of at least 800 N/mm².

11. The packaging film as claimed in one or more of claims 1 to 10, wherein its moisture vapor transition rate normalised to 1 mm thickness is in the range of less than 0,5 g·mm/(m²·day), preferred of less than 0,35 g·mm/(m²·day).

12. A process for producing a sealable, multilayer packaging film as claimed in claims 1 to 11 wherein the polymer mixtures and polymers forming the layers of the film are melted in separate extruders and the melted polymers are coextruded through a flat-film die or a tubular die and the resultant coextruded film is drawn off on one or more rolls, whereupon it cools and solidifies, followed, where appropriate, by surface treatment of the film, thereby omitting any stretching step.

13. The process as claimed in claim 12, wherein additives used are present in the polymer or polymer mixture as it stands, or are added via masterbatch technology.

14. The use of a packaging film as claimed in one or more of claims 1 to 11 for its application in "flow-pack" packages produced on form-fill-seal machines

15. The use of a packaging film as claimed in one or more of claims 1 to 11 for its application as a cover film on thermoformed blister packages or on cups (lidding).

## Patentansprüche

1. Mehrschichtige Verpackungsfolie mit einer Kernschicht A, die eine Menge von 50 bis 100 Gew.-%, bezogen auf das Gesamtgewicht der Kernschicht A, eines amorphen Cycloolefincopolymers (COC) mit einer Glasübergangstemperatur T_{g} von mindestens 60°C enthält, und mindestens zwei Deckschichten B und C auf den beiden Seiten der Kernschicht A, von denen eine mindestens ein siegelfähiges Polymer enthält und von denen eine mindestens ein funktionelles Polymer enthält, wobei zwischen der Kernschicht A und den Deckschichten B und C zusätzliche Zwischenschichten angeordnet sein können, die eine feste Verbindung zwischen der Kernschicht A und den Deckschichten B und C bewirken, und wobei die Folie eine Gesamtdicke von 10 bis 200 *µ*m und vorzugsweise von 20 bis 150 *µ*m aufweist, **dadurch gekennzeichnet, daß** auf die Kernschicht A 5 bis 60%, vorzugsweise 10 bis 50% und besonders bevorzugt 15 bis 40%, der Gesamtdicke der Folie entfallen.

2. Verpackungsfolie nach Anspruch 1, **dadurch gekennzeichnet, daß** das COC ein Copolymer aus Ethylen und/oder einem α-Olefin mit einem cyclischen, bicyclischen oder multicyclischen Olefin ist.

3. Verpackungsfolie nach Anspruch 1 oder 2, **dadurch gekennzeichnet, daß** das COC ein Copolymer aus Ethylen und Norbornen ist.

4. Verpackungsfolie nach einem oder mehreren der Ansprüche 1 bis 3, **dadurch gekennzeichnet, daß** die funktionellen Polymere die Barriereeigenschaften von COC in bezug auf die Gasdurchlässigkeit weiter verbessernde Polymere oder die Reibungseigenschaften der Folie verbessernde Additive enthaltende Polymere, umfassen.

5. Verpackungsfolie nach einem oder mehreren der Ansprüche 1 bis 4, **dadurch gekennzeichnet, daß** die funktionellen Polymere durch Umsetzung von Diaminen mit Dicarbonsäuren oder durch Ringöffnung von Lactamen, wie Polyhexamethylensebacinsäureamid und Poly-epsilon-caprolactam, hergestellte Polyamide oder andere Polymere mit funktionellen Eigenschaften, wie Ethylen-Vinylalkohol-Copolymere oder Polvinylalkohole mit unterschiedlichen Verseifungsgraden und Polyester, wie Polyethylenterephthalat oder Polybutylenterephthalat, umfassen.

6. Verpackungsfolie nach einem oder mehreren der Ansprüche 1 bis 5, **dadurch gekennzeichnet, daß** die Additive Antiblockmittel, wie anorganische Partikel aus Erdalkalimetallcarbonaten, Alkalimetallcarbonaten, Oxiden oder Silikaten, umfassen.

7. Verpackungsfolie nach einem oder mehreren der Ansprüche 1 bis 6, **dadurch gekennzeichnet, daß** die funktionellen Polymere ferner organische Gleitmittel, wie Polydialkylsiloxane, umfassen.

8. Verpackungsfolie nach einem oder mehreren der Ansprüche 1 bis 7, **dadurch gekennzeichnet, daß** die siegelfähigen Polymere Polyolefine wie Polyethylen oder Copolymere von Ethylen und Propylen oder Copolymere von Ethylen und Vinylacetat oder siegelfähige Ionomere umfassen.

9. Verpackungsfolie nach einem oder mehreren der Ansprüche 1 bis 8, **dadurch gekennzeichnet, daß** die Zwischenschichten Haftvermittler, Primerzusammensetzungen oder Klebstoffe enthalten.

10. Verpackungsfolie nach einem oder mehreren der Ansprüche 1 bis 9, **dadurch gekennzeichnet, daß** ihr Zug-Dehnungs-Modul im Bereich von mindestens 500 N/mm², vorzugsweise mindestens 700 N/mm² und besonders bevorzugt mindestens 800 N/mm² liegt.

11. Verpackungsfolie nach einem oder mehreren der Ansprüche 1 bis 10, **dadurch gekennzeichnet, daß** ihre auf 1 mm Dicke normierte Feuchtigkeitsdurchlässigkeit im Bereich von weniger als 0,5 g·mm/(m²·Tag) und vorzugsweise weniger als 0,35 g·mm/ (m²·Tag) liegt.

12. Verfahren zur Herstellung einer siegelfähigen, mehrschichtigen Verpackungsfolie nach den Ansprüchen 1 bis 11, bei dem man die Polymermischungen und Polymere, die die Schichten der Folie bilden, in getrennten Extrudern aufschmilzt und die geschmolzenen Polymere durch eine Breitschlitzdüse oder eine Ringdüse coextrudiert und die so erhaltene coextrudierte Folie auf einer oder mehreren Walzen abzieht, wobei sie abkühlt und sich verfestigt, und danach die Folie unter Weglassung jeglicher Streckschritte gegebenenfalls oberflächenbehandelt.

13. Verfahren nach Anspruch 12, **dadurch gekennzeichnet, daß** verwendete Additive bereits in dem Polymer bzw. in der Polymermischung enthalten sind oder via Masterbatch-Technik zugegeben werden.

14. Verwendung einer Verpackungsfolie nach einem oder mehreren der Ansprüche 1 bis 11 zur Anwendung in "Flow-Pack"-Verpackungen, die auf Form-, Füll- und Schließ-Maschinen hergestellt werden.

15. Verwendung einer Verpackungsfolie nach einem oder mehreren der Ansprüche 1 bis 11 zur Anwendung als Deckfolie auf thermogeformten Blisterpackungen oder auf Bechern (Verdeckelung).

## Revendications

1. Film de conditionnement multicouche comprenant une couche de coeur A comprenant une quantité de 50 à 100 % en poids, sur la base du poids total de la couche de coeur A, d'un copolymère de cyclo-oléfine amorphe (COC) qui a une température de transition vitreuse Tg d'au moins 60 °C, et comprenant au moins deux couches externes B et C sur les deux côtés de la couche de coeur A,, l'une d'elles comprend au moins un polymère scellable, et l'une d'elles comprend au moins un polymère fonctionnel, dans lequel entre la couche de coeur A et les couches externes B et C peuvent être disposées des couches intermédiaires additionnelles permettant d'obtenir une liaison solide entre la couche de coeur A et les couches externes B et C, et dans lequel le film a une épaisseur totale dans la gamme de 10 à 200 µm, de préférence de 20 à 150 µm, la couche de coeur A représentant de 5 à 60 % de l'épaisseur totale du film, de préférence de 10 à 50 %, de manière particulièrement préférée de 15 à 40 %.

2. Film de conditionnement selon la revendication 1, dans lequel le COC est un copolymère d'éthylène et/ou d'une α-oléfine avec une oléfine cyclique, bicyclique ou multicyclique.

3. Film de conditionnement selon la revendication 1 ou 2, dans lequel le COC est un copolymère fait d'éthylène et de norbornène.

4. Film de conditionnement selon l'une quelconque des revendications 1 à 3, dans lequel les polymères fonctionnels comprennent des polymères améliorant encore les propriétés de barrière du COC en termes de vitesse de transmission des gaz ou des polymères qui comprennent des additifs améliorant les propriétés de friction du film.

5. Film de conditionnement selon l'une quelconque des revendications 1 à 4, dans lequel les polymères fonctionnels comprennent des polyamides, produits par la réaction de diamines avec des acides dicarboxyliques ou par ouverture de cycle de lactames, tels que le polyhexaméthylènesébacamide et le poly-epsilon-caprolactame, ou d'autres polymères avec des propriétés fonctionnelles, tels que les copolymères d'éthylène et de vinylalcool ou les alcools polyvinyliques avec différents degrés d'hydrolyse et les polyesters, tels que le polytéréphtalate d'éthylène ou le polytéréphtalate de butylène.

6. Film de conditionnement selon une ou plusieurs des revendications 1 à 5, dans lequel les additifs comprennent les agents anti-blocage, tels que les particules inorganiques faites de carbonates de métaux alcalino-terreux ou de carbonates de métaux alcalins, ou d'oxydes, ou de silicates.

7. Film de conditionnement selon une ou plusieurs des revendications 1 à 6, dans lequel les polymères fonctionnels comprennent en outre des lubrifiants organiques, tels que des polydialkylsiloxanes.

8. Film de conditionnement selon une ou plusieurs des revendications 1 à 7, dans lequel les polymères scellables comprennent des polyoléfines telles que le polyéthylène ou des copolymères d'éthylène et de propylène ou des copolymères d'éthylène et d'acétate de vinyle ou des ionomères scellables.

9. Film de conditionnement selon une ou plusieurs des revendications 1 à 8, dans lequel les couches intermédiaires comprennent des promoteurs d'adhérence, des compositions de primaire ou des adhésifs.

10. Film de conditionnement selon une ou plusieurs des revendications 1 à 9, dans lequel le module d'allongement à la traction est dans la gamme d'au moins 500 N/mm², de préférence d'au moins 700 N/mm², mieux encore d'au moins 800 N/mm².

11. Film de conditionnement selon une ou plusieurs des revendications 1 à 10, dans lequel la vitesse de transition de la vapeur d'eau normalisée à 1 mm d'épaisseur est dans la gamme de moins de 0, 5 g·mm/(m²·jour), de préférence de moins de 0, 5 g·mm/(m²·jour).

12. Procédé de production d'un film de conditionnement multicouche, scellable selon les revendications 1 à 11, dans lequel les mélanges de polymères et les polymères formant les couches du film sont fondus dans des extrudeuses séparées et les polymères fondus sont co-extrudés à travers une filière à film plat ou une filière tubulaire et le film co-extrudé résultant est tiré sur un ou plusieurs cylindres, sur lesquels il se refroidit et se solidifie, puis on effectue, si approprié, un traitement de surface du film, ce qui supprime une étape quelconque d'étirage.

13. Procédé selon la revendication 12, dans lequel les additifs utilisés sont présents dans le polymère ou mélange de polymères tel qu'il est, ou sont ajoutés via la technologie du lot maître.

14. Utilisation d'un film de conditionnement selon une ou plusieurs des revendications 1 à 11 pour application dans des applications de conditionnement en « sacs thermo-soudés » produits sur des machines formeuses-remplisseuses-scelleuses.

15. Utilisation d'un film de conditionnement selon une ou plusieurs des revendications 1 à 11 pour application comme film de protection sur des emballages-coques thermoformés ou sur des caissettes (boîtes à couvercle).
